# EUROPEAN PATENT APPLICATION

(11) **EP 4 293 478 A1**
(43) Date of publication of application: **20.12.2023**
(21) Application number: 21943419.8
(22) Date of filing: 31.05.2021
(51) Int. Cl.: G06F 1/32

(54) **MEMORY MANAGEMENT APPARATUS AND METHOD, AND ELECTRONIC DEVICE**

(71) Applicant: Huawei Technologies Co., Ltd., Shenzhen, Guangdong 518129 (CN)
(72) Inventor: YU, Dongbin, Shenzhen, Guangdong 518129 (CN); CHEN, Yubing, Shenzhen, Guangdong 518129 (CN); CUI, Yong, Shenzhen, Guangdong 518129 (CN); SUN, Hongyu, Shenzhen, Guangdong 518129 (CN)
(74) Representative: MERH-IP Matias Erny Reichl Hoffmann Patentanwälte PartG mbB
(86) International application number: PCT/CN2021/097360
(87) International publication number: WO 2022/252042

(57) **Abstract**

A memory management apparatus is provided, including: a signal generation circuit (410) and a power supply management circuit (420). The signal generation circuit (410) is configured to provide an individual clock signal for each channel cluster in a plurality of channel clusters in a memory, where each channel cluster includes one or more channels, and each channel includes a plurality of storage units. The power supply management circuit (420) is configured to provide an individual power supply signal for each channel cluster. Refined adjustment on performance of the memory is implemented, so that differentiated supply and demand adjustment on the performance of the memory and differentiated management on power consumption of the memory are better implemented.

## Description

### TECHNICAL FIELD

This application relates to the field of memory management technologies, and in particular, to a memory management apparatus, a memory management method, and an electronic device.

### BACKGROUND

With great development of electronic science and technologies, an electronic device is widely used in fields such as life, engineering control, and aerospace. When the electronic device is in different states, the electronic device has different requirements on performance of a memory. In a conventional technology, a memory is used as a whole, and performance of the memory is adjusted by adjusting a working status of the memory based on a requirement of an electronic device on the performance of the memory, for example, adjusting a working voltage (which is referred to as voltage adjustment for short) and adjusting a clock frequency (which is referred to as frequency adjustment for short). However, when the memory is adjusted as a whole, only rough adjustment can be performed on the performance of the memory, and refined adjustment cannot be performed on the performance of the memory. As a result, differentiated supply and demand adjustment on the performance of the memory cannot be well implemented.

### SUMMARY

This application provides a memory management apparatus and a memory management method, which are configured to implement refined adjustment on performance of a memory.

According to a first aspect, this application provides a memory management apparatus, including a signal generation circuit and a power supply management circuit. The signal generation circuit is configured to provide an individual clock signal for each channel cluster in a plurality of channel clusters in a memory, where each channel cluster includes one or more channels, and each channel includes a plurality of storage units. The power supply management circuit is configured to provide an individual power supply signal for each channel cluster.

The signal generation circuit is configured to provide the individual clock signal for each channel cluster in the plurality of channel clusters in the memory, and the power supply management circuit is configured to provide the individual power supply signal for each channel cluster in the plurality of channel clusters in the memory. Therefore, independent frequency adjustment, voltage adjustment, and/or power on/off control can be implemented for each channel cluster by using the signal generation circuit and the power supply management circuit, to implement refined adjustment on performance of the memory, so that differentiated supply and demand adjustment on the performance of the memory and differentiated management on power consumption of the memory are better implemented.

In a possible implementation, the apparatus further includes: a processor, configured to adjust a working status of the memory.

In a possible implementation, the processor is specifically configured to perform at least one of the following to adjust the working status of the memory: controlling the signal generation circuit to perform frequency adjustment on at least one channel cluster in the plurality of channel clusters; controlling the power supply management circuit to perform voltage adjustment on the at least one channel cluster; or controlling the signal generation circuit and the power supply management circuit to perform power on/off on the at least one channel cluster in the plurality of channel clusters.

In a possible implementation, the apparatus further includes a channel interleaving controller. The processor is further configured to set a channel interleaving mode for the channel interleaving controller, and deliver an access instruction. The channel interleaving mode indicates an interleaving rule of each channel cluster. The access instruction is for accessing a first channel cluster in the plurality of channel clusters. The channel interleaving controller is configured to interleave, based on an interleaving rule of the first channel cluster, a first address that is in the access instruction and that corresponds to the first channel cluster, to obtain a second address for accessing the first channel cluster.

In a possible implementation, the apparatus further includes a plurality of storage controllers, and the plurality of storage controllers are in a one-to-one correspondence with a plurality of channels in the memory. A first storage controller in the plurality of storage controllers corresponds to a first channel in the first channel cluster, and is configured to access the first channel based on a third address indicated in the second address.

In a possible implementation, the apparatus further includes a plurality of performance monitors, and the plurality of performance monitors are in a one-to-one correspondence with the plurality of channel clusters. Each performance monitor in the plurality of performance monitors is configured to monitor performance of a channel cluster corresponding to each performance monitor. The processor is specifically configured to adjust the working status of the memory based on performance of the plurality of channel clusters.

In a possible implementation, the processor is specifically configured to: when system load of an electronic device to which the memory belongs does not match the performance of the plurality of channel clusters, adjust the working status of the memory.

In a possible implementation, the processor is specifically configured to: when receiving a sleep notification of an electronic device to which the memory belongs, adjust the working status of the memory.

In a possible implementation, the processor is specifically configured to perform the following steps to power off the at least one channel cluster: migrating information in the at least one channel cluster to at least one target channel cluster; and controlling the signal generation circuit and the power supply management circuit to power off the at least one channel cluster. The at least one target channel cluster is at least one channel cluster that has a smallest capacity in the plurality of channel clusters and that can accommodate information in the memory.

In a possible implementation, the processor is further configured to downsize the information, to help the downsized information to be accommodated in the at least one target channel cluster.

According to a second aspect, this application provides a memory management method, including: controlling, by using a processor, a signal generation circuit and a power supply management circuit, to adjust a working status of a memory; providing, by using the signal generation circuit, an individual clock signal for each channel cluster in a plurality of channel clusters in the memory, where each channel cluster includes one or more channels, and each channel includes a plurality of storage units; and providing, by using the power supply management circuit, an individual power supply signal for each channel cluster.

In a possible implementation, the controlling, by using a processor, a signal generation circuit and a power supply management circuit, to adjust a working status of a memory includes at least one of the following: controlling the signal generation circuit to perform frequency adjustment on at least one channel cluster in the plurality of channel clusters; controlling the power supply management circuit to perform voltage adjustment on the at least one channel cluster; or controlling the signal generation circuit and the power supply management circuit to perform power on/off on the at least one channel cluster in the plurality of channel clusters.

In a possible implementation, the method further includes: configuring, by using the processor, a channel interleaving mode for a channel interleaving controller, where the channel interleaving mode indicates an interleaving rule of each channel cluster; delivering an access instruction by using the processor, where the access instruction is for accessing a first channel cluster in the plurality of channel clusters; and interleaving, by using the channel interleaving controller and based on an interleaving rule of the first channel cluster, a first address that is in the access instruction and that corresponds to the first channel cluster, to obtain a second address for accessing the first channel cluster.

In a possible implementation, the method further includes: accessing, by using a first storage controller in a plurality of storage controllers, a first channel based on a third address indicated in the second address. The plurality of storage controllers are in a one-to-one correspondence with a plurality of channels in the memory, and the first storage controller corresponds to the first channel in the first channel cluster.

In a possible implementation, the method further includes: monitoring, by using each performance monitor in a plurality of performance monitors, performance of a channel cluster corresponding to each performance monitor. The plurality of performance monitors are in a one-to-one correspondence with the plurality of channel clusters. The adjusting a working status of a memory includes: adjusting, based on performance of the plurality of channel clusters, the working status of the memory.

In a possible implementation, the adjusting the working status of the memory includes: when system load of an electronic device to which the memory belongs does not match the performance of the plurality of channel clusters, adjusting the working status of the memory.

In a possible implementation, the adjusting a working status of a memory includes: when receiving a sleep notification of an electronic device to which the memory belongs, adjusting the working status of the memory.

In a possible implementation, the controlling the signal generation circuit and the power supply management circuit to perform power on/off on the at least one channel cluster includes: migrating information in the at least one channel cluster to at least one target channel cluster; and controlling the signal generation circuit and the power supply management circuit to power off the at least one channel cluster. The at least one target channel cluster is at least one channel cluster that has a smallest capacity in the plurality of channel clusters and that can accommodate information in the memory.

In a possible implementation, the method further includes: downsizing, by using the processor, the information, to help the downsized information to be accommodated in the at least one target channel cluster.

According to a third aspect, this application provides a computer-readable storage medium, including a computer program. When the computer program is executed on a computer or a processor, the computer or the processor is enabled to perform the method in any one of the second aspect.

According to a fourth aspect, this application provides a computer program. When the computer program is executed by a computer or a processor, the computer or the processor is configured to perform the method in any one of the second aspect.

According to a fifth aspect, this application provides an electronic device, including the memory management device and the memory in any one of the foregoing first aspect. The memory management device is configured to adjust a working status of the memory.

### BRIEF DESCRIPTION OF DRAWINGS

FIG. 1 is a schematic diagram of a structure of a storage according to an embodiment of this application;
FIG. 2 is a schematic diagram of an interleaving rule of a storage unit in a channel cluster according to an embodiment of this application;
FIG. 3 is a schematic diagram of a structure of an electronic device according to an embodiment of this application;
FIG. 4 is a schematic diagram of a structure of a memory management apparatus according to an embodiment of this application;
FIG. 5 is a schematic flowchart 1 of adjusting a working status of a memory according to an embodiment of this application;
FIG. 6 is a schematic flowchart 2 of adjusting a working status of a memory according to an embodiment of this application;
FIG. 7 is a schematic flowchart 3 of adjusting a working status of a memory according to an embodiment of this application; and
FIG. 8A and FIG. 8B are a schematic flowchart 4 of adjusting a working status of a memory according to an embodiment of this application.

### DESCRIPTION OF EMBODIMENTS

The following describes technical solutions of this application with reference to accompanying drawings. To make the objectives, technical solutions, and advantages of this application clearer, the following clearly and completely describes the technical solutions of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

In this specification, embodiments, claims, and accompanying drawings of this application, terms "first", "second", and the like are merely intended for distinguishing and description, and shall not be understood as an indication or implication of relative importance or an indication or implication of an order. In addition, the terms "include", "have", and any variant thereof are intended to cover non-exclusive inclusion, for example, include a series of steps or units. Methods, systems, products, or devices are not necessarily limited to those steps or units that are literally listed, but may include other steps or units that are not literally listed or that are inherent to such processes, methods, products, or devices.

It should be understood that in this application, "at least one (item)" refers to one or more and "a plurality of" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

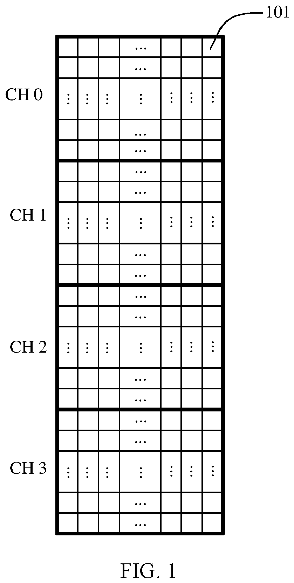

A memory in this application may be understood as: The memory is configured to store information, and the information includes but is not limited to a program, instructions, data required and data generated in a running process of an electronic device, and the like. The memory is implemented by using one or more storages. The storage includes but is not limited to a volatile memory such as a DDR (double rate synchronous dynamic random access memory, Double Data Rate Synchronous Dynamic Random Access Memory) chip. The storage includes a plurality of channels (Channels, CHs), and each channel includes a plurality of storage units. For example, refer to FIG. 1. A storage includes four channels CH 0 to CH 3, and each channel includes a plurality of storage units 101. The storage unit 101 may be a storage unit into which a one-bit binary digit is written, or the storage unit 101 may alternatively be a storage unit into which a multi-bit binary digit is written. This is not specifically limited in this application.

The memory includes a plurality of channel clusters, and each channel cluster includes one or more channels. The channel cluster is also referred to as a channel group or a group of channels. The plurality of channels in the memory are channels in the one or more storages in the memory. The information in the memory includes information stored in the plurality of channel clusters in the memory. For example, the memory includes eight channels, and there are two channel clusters. One channel cluster includes two channels, and the other channel cluster includes six channels. Alternatively, the memory includes four channels, and there are two channel clusters. Each channel cluster includes two channels. Alternatively, the memory includes four channels, and there are three channel clusters. One channel cluster includes two channels, and the other two channel clusters each include one channel.

Each channel cluster has one interleaving rule, and the interleaving rule of each channel cluster indicates an addressing rule of a storage unit in the corresponding channel cluster. The storage unit in each channel cluster is a storage unit in the one or more channels included in each channel cluster. An interleaving rule of a channel cluster is used when the channel cluster is accessed. A specific process is described below.

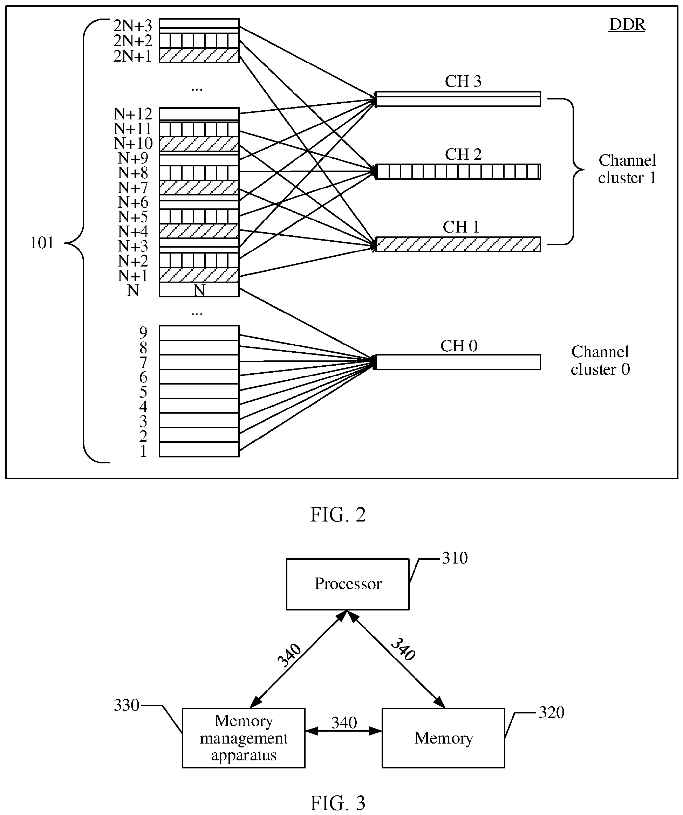

The following describes a channel cluster in a memory and an interleaving rule of the channel cluster by using an example. Refer to FIG. 2. A memory includes one storage, and the storage is a DDR. The DDR includes four channels CH 0 to CH 3, and each channel includes a plurality of storage units 101. The plurality of storage units 101 included in the channel are the storage units 101 that point to the channel in FIG. 2. The memory includes two channel clusters, where a channel cluster 0 includes a channel CH 0, and a channel cluster 1 includes channels CH 1 to CH 3. An interleaving rule of the channel cluster 0 is to sequentially address storage units in the channel CH 0 in ascending order. An interleaving rule of the channel cluster 1 is to address storage units in the channels CH 1 to CH 3 in a sequential cross manner. For the cross manner, refer to an addressing manner of the storage units that are sequentially from the channels CH 1 to CH 3 and that are shown on the left of FIG. 2. Addresses of the storage units sequentially from the channels CH 1 to CH 3 range from N+1 to 2N+3. It should be noted that the foregoing interleaving rule of the channel cluster is merely an example, and is not intended to limit this application.

To implement refined adjustment on performance of a memory and better implement differentiated supply and demand adjustment on the performance of the memory, an embodiment of this application provides an electronic device. The electronic device may be used in fields such as engineering control, aerospace, or daily life. The electronic device includes but is not limited to a mobile phone, a computer, an e-reader, a smartwatch, a learning machine, an internet of things (Internet of Things, IoT) device, a vehicle-mounted unit, or the like.

FIG. 3 is a schematic diagram of a structure of an electronic device according to this embodiment of this application. As shown in FIG. 3, the electronic device includes a processor 310, a memory 320, a memory management apparatus 330, and a bus 340. The processor 310, the memory 320, and the memory management apparatus 330 are coupled to each other by using the bus 340.

The processor 310 includes but is not limited to a central processing unit (CPU), a microcontroller (MCU), a digital signal processor (DSP), a neural processing unit (NPU), a microprocessor, or the like. The processor 310 may indicate or control the memory management device 330 to manage the memory 320. The memory 320 has been described above, and details are not described herein again. The memory management apparatus 330 is configured to provide an individual clock signal and an individual power supply signal for each channel cluster in a plurality of channel clusters in the memory 320. In other words, clock signals of different channel clusters in the plurality of channel clusters may be independently controlled, and power supply signals of the different channel clusters may be independently controlled. The independent control includes but is not limited to at least one of enabling, disabling, or changing a size. For example, the memory management apparatus 330 may include a power supply management subsystem and a power consumption control subsystem. The processor 310, the memory 320, and the memory management apparatus 330 may be integrated into a single chip, or may be separately disposed. This is not specifically limited in this application.

It is obvious that because the memory management apparatus 330 provides the individual clock signal and the individual power supply signal for each channel cluster in the plurality of channel clusters in the memory 320, the memory management apparatus 330 can independently control the clock signal and/or the power supply signal that are/is provided for each channel cluster, to implement independent frequency adjustment, voltage adjustment, and/or power on/off control on each channel cluster. In comparison with a solution in which a memory is adjusted as a whole in a conventional technology, in this application, independent frequency adjustment, voltage adjustment, and/or power on/off control can be performed on each channel cluster in the memory 320. Therefore, a working status of the memory 320 can be adjusted by performing independent frequency, voltage adjustment, and/or power on/off control on each channel cluster in the memory 320, to implement refined adjustment on performance of the memory 320, so that differentiated supply and demand adjustment on the memory 320 and differentiated management on power consumption of the memory 320 are better implemented.

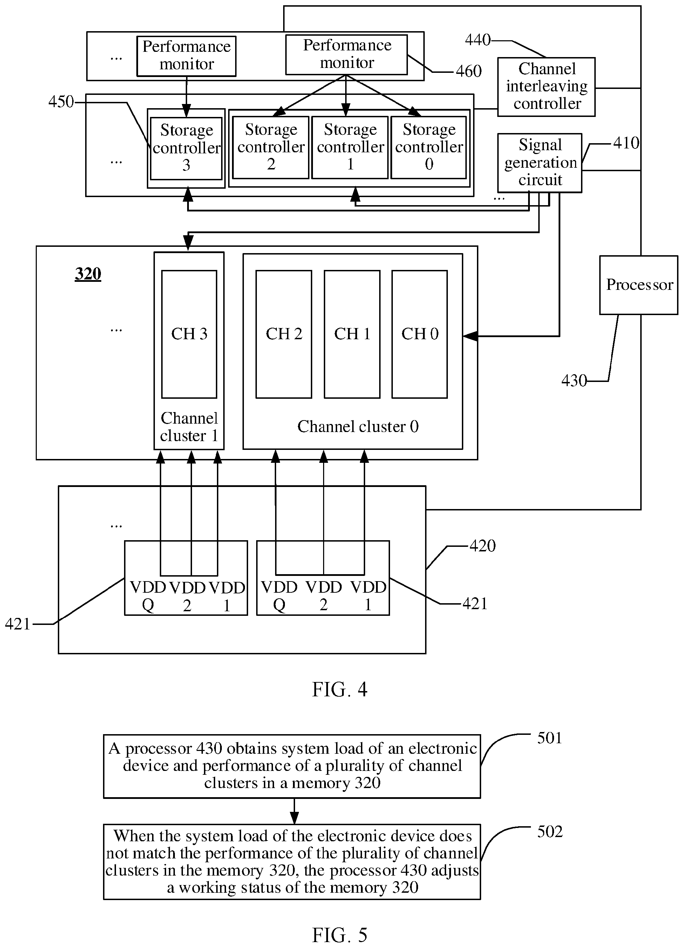

FIG. 4 is a schematic diagram of a structure of a memory management apparatus 330 according to an embodiment of this application. As shown in FIG. 4, the apparatus includes a signal generation circuit 410, a power supply management circuit 420, a processor 430, a channel interleaving controller 440, a plurality of storage controllers 450, and a plurality of performance monitors 460. The signal generation circuit 410 is configured to provide an individual clock signal for each channel cluster in a plurality of channel clusters in a memory 320. In other words, enabling, disabling, or adjustment for each clock signal may be independently performed. The signal generation circuit 410 is further configured to provide an individual reset signal or termination signal for each channel cluster in the plurality of channel clusters in the memory 320.

The power supply management circuit 420 is configured to provide an individual power supply signal for each channel cluster in the plurality of channel clusters in the memory 320. A plurality of power supplies 421 may be disposed in the power supply management circuit 420, and the plurality of power supplies 421 are in a one-to-one correspondence with the plurality of channel clusters in the memory 320. Each power supply 421 includes a voltage drain drain signal generation circuit, configured to provide a power supply signal for a corresponding channel cluster. This embodiment is described by using three power supply signals VDD 1, VDD 2, and VDD Q as an example. The channel cluster includes different components, for example, different storage unit sets. Therefore, the power supply signal provided for the channel cluster may include a plurality of voltage drain drains, or may include only one voltage drain drain, so that when the power supply signal provided for the channel cluster includes a plurality of voltage drain drains, power is supplied to the different components in the channel cluster by using at least one of the plurality of voltage drain drains, or when the power supply signal provided for the channel cluster includes one voltage drain drain, power is supplied to the different components in the channel cluster by using the voltage drain drain. This is not limited in this embodiment. For example, in FIG. 4, the channel cluster may run by using at least one of VDD 1, VDD 2, and VDD Q as a power source. Each power supply 421 may control at least one of the power supply signals VDD 1, VDD 2, and VDD Q that are output by the power supply 421, and different power supplies 421 independently control power supply signals VDD 1, VDD 2, and VDD Q thereof. In other words, the power supply signals VDD 1, VDD 2, and VDD Q of each power supply 421 may be enabled, disabled, or adjusted independently.

It is obvious that because the signal generation circuit 410 is configured to provide the individual clock signal for each channel cluster in the plurality of channel clusters in the memory 320, and the power supply management circuit 420 is configured to provide the individual power supply signal for each channel cluster in the plurality of channel clusters in the memory 320, independent frequency adjustment, voltage adjustment, and/or power on/off control can be implemented on each channel cluster by using the signal generation circuit 410 and the power supply management circuit 420, to implement refined adjustment on performance of the memory 320, so that differentiated supply and demand adjustment on the performance of the memory and differentiated management on power consumption of the memory are better implemented.

The processor 310 in the electronic device may be reused as the processor 430, or the processor 430 may be a processor independent of the processor 310 in the electronic device. This is not specifically limited in this application. The processor 430 is configured to set a channel interleaving mode for the channel interleaving controller 440, and deliver an access instruction. The access instruction is for accessing a first channel cluster in the plurality of channel clusters in the memory 320. The channel interleaving mode indicates a quantity of the plurality of channel clusters in the memory 320, a quantity of one or more channels in each channel cluster, and an interleaving rule of each channel cluster. The channel interleaving mode may be determined based on different purposes of information stored in the memory 320 of the electronic device, a requirement of information of each purpose on the performance of the memory 320, and performance of each channel in the memory 320. After the channel interleaving mode is determined, interleaving design is performed on a plurality of channels in the memory 320, to obtain the plurality of channel clusters. In this way, a corresponding channel cluster may be disposed for the information of each purpose, and the information of each purpose is stored in the corresponding channel cluster. For example, the memory 320 of the electronic device stores information of two purposes, where one is system image running information, and the other is anonymous information and file cache information. In this way, channel interleaving may be performed on the plurality of channels in the memory 320 based on an amount of the information of each purpose and performance of each channel in the memory 320, to obtain two channel clusters. The two channel clusters are in a one-to-one correspondence with the information of the two purposes, and each channel cluster is configured to store information of a corresponding purpose. Finally, a channel interleaving mode corresponding to the configuration is obtained. The access instruction indicates to perform a read operation or a write operation on the memory 320. This is not specifically limited in this application.

The channel interleaving controller 440 is configured to interleave, based on an interleaving rule of the first channel cluster, a first address that is in the access instruction and that corresponds to the first channel cluster, to obtain a second address for accessing the first channel cluster. Herein, when receiving the access instruction, the channel interleaving controller 440 determines the first channel cluster based on a channel cluster identifier carried in the access instruction, and then interleaves, based on the interleaving rule of the first channel cluster, the address that is in the access instruction and that corresponds to the first channel cluster, to obtain the second address for accessing the first channel cluster. The first channel cluster includes one or more channels. Therefore, access to the first channel cluster by the access instruction refers to access to a first channel in the one or more channels included in the first channel cluster by the access instruction, and there is at least one first channel. Based on this, after the first address that is in the access instruction and that corresponds to the first channel cluster is interleaved by using the interleaving rule of the first channel cluster, the obtained second address carries an address for the access instruction to access each first channel in the first channel cluster and an identifier of each first channel.

The plurality of storage controllers 450 are in a one-to-one correspondence with the plurality of channels in the memory 320. A first storage controller in the plurality of storage controllers 450 is configured to access the first channel based on a third address indicated in the second address. The first storage controller corresponds to the first channel in the first channel cluster. Specifically, after obtaining the second address for accessing the first channel cluster, the channel interleaving controller 440 determines, based on the identifier of the first channel carried in the second address, the first storage controller corresponding to the first channel, and sends the second address to the first storage controller. The first storage controller obtains the third address from the second address, where the third address is an address that is in the second address and that is for accessing the first channel. After converting the third address into a readable address of the first channel, the first storage controller accesses the first channel by using the converted address.

When a channel in the memory 320 is accessed, the access instruction needs to be transmitted to the channel through a storage controller 450 corresponding to the channel. Based on this, the storage controller 450 may control and manage the channel based on the access instruction that is transmitted to the corresponding channel through the storage controller 450. Further, the plurality of storage controllers 450 may be grouped based on channel interleaving modes of the plurality of channels in the memory 320. Storage controllers 450 corresponding to channels in a same channel cluster are grouped into one group. The storage controller 450 needs to be driven by using a clock signal. Therefore, the signal generation circuit 410 is further configured to provide clock signals independent of each other for all groups of storage controllers.

The plurality of performance monitors 460 are in a one-to-one correspondence with the plurality of channel clusters in the memory 320, and each performance monitor 460 in the plurality of performance monitors 460 is configured to monitor performance of a channel cluster corresponding to each performance monitor 460. The performance of the channel cluster includes but is not limited to a frequency (namely, the clock frequency mentioned above), a hit rate, an input bandwidth, delay information, voltage information, and the like of the channel cluster. It should be noted that, the storage controller 450 may control and manage the channel by using the access instruction that is transmitted to the corresponding channel through the storage controller 450. Therefore, the performance monitor 450 may monitor the performance of the corresponding channel cluster by monitoring the storage controller 450 corresponding to one or more channels in the corresponding channel cluster.

When the electronic device is in different states, the electronic device has different requirements on the performance of the memory 320. Therefore, the processor 430 is further configured to adjust a working status of the memory 320, to adjust the performance of the memory 320 by adjusting the working status of the memory 320, so that the performance of the memory 320 meets a requirement of the electronic device on the performance of the memory, and differentiated management on the performance and the power consumption of the memory 320 is implemented. Because a status of the electronic device includes a running state and a sleep state, the following describes, based on the foregoing two states, a process in which the processor 430 adjusts the working status of the memory 320.

When the electronic device is in the running state, the requirement of the electronic device on the performance of the memory 320 varies with system load of the electronic device. It may be understood that, when the system load of the electronic device changes, the requirement of the electronic device on the performance of the memory 320 changes. In this case, the system load of the electronic device does not match the performance of the memory 320, and the working status of the memory 320 needs to be adjusted, to adjust the performance of the memory 320, so that the system load of the electronic device matches the performance of the memory 320. Based on this, when the system load of the electronic device does not match the performance of the memory 320, the processor 430 adjusts the working status of the memory 320, to adjust the performance of the memory 320, so that the performance of the memory 320 matches the system load of the electronic device. The performance of the memory 320 refers to performance of the plurality of channel clusters in the memory 320. The performance of the plurality of channel clusters includes performance of each channel cluster in the plurality of channel clusters.

FIG. 5 is a schematic flowchart 1 of adjusting a working status of a memory according to an embodiment of this application. As shown in FIG. 5, the adjustment process includes the following steps. 501: A processor 430 obtains system load of an electronic device and performance of a plurality of channel clusters in a memory 320. The system load of the electronic device includes but is not limited to a quantity of processes, an input/output (I/O) queue application, storage pressure information, a storage fragmentation degree, or the like. An occasion for performing 501 includes but is not limited to the following two occasions: In a first occasion, the system load of the electronic device and the performance of the plurality of channel clusters in the memory 320 are periodically obtained. In a second occasion, there are a plurality of running scenarios when the electronic device in a running state. When the running scenario changes, the system load of the electronic device also changes. Therefore, the running scenario of the electronic device may be periodically identified. If the running scenario of the electronic device changes, the system load of the electronic device and the performance of the plurality of channel clusters in the memory 320 are obtained. The running scenario of the electronic device includes but is not limited to a reading scenario, a game scenario, a screen-off scenario, a music playback scenario, or the like. For example, a manner of identifying the running scenario of the electronic device may be: establishing a neural network model, obtaining various data information of the electronic device in each running scenario, and training the neural network model by using the various data information of the electronic device in each scenario, to obtain a running scenario identification model. In this way, various data information in a running process of the electronic device may be obtained, and the obtained various data information may be input into the running scenario identification module, so that the running scenario identification model outputs the running scenario of the electronic device. The processor 430 may obtain, from each performance monitor 460 in a plurality of performance monitors 460, performance of a channel cluster corresponding to the performance monitor 460, to obtain performance of each channel cluster in the plurality of channel clusters, to obtain the performance of the plurality of channel clusters.

502: When the system load of the electronic device does not match the performance of the plurality of channel clusters in the memory 320, the processor 430 adjusts a working status of the memory 320. A manner of adjusting the working status of the memory 320 includes the following two manners. In a first manner, target performance of the plurality of channel clusters in the memory 320 is determined based on the system load of the electronic device, where the target performance matches the system load of the electronic device. Then, the performance of the plurality of channel clusters in the memory 320 is adjusted to the target performance by adjusting the working status of the memory 320. It should be noted that, if the target performance of the plurality of channel clusters in the memory 320 exceeds a performance threshold of the plurality of channel clusters in the memory 320, the performance of the plurality of channel clusters in the memory 320 is adjusted to a threshold value. In a second manner, the working status of the memory 320 is gradually adjusted, so that the performance of the plurality of channel clusters in the memory 320 is gradually adjusted, until adjusted performance of the plurality of channel clusters in the memory 320 matches the system load. To be specific, each time the working status of the memory 320 is adjusted, the system load needs to be matched with the adjusted performance of the plurality of channel clusters in the memory 320. If the system load matches the adjusted performance, the adjustment is stopped. If the system load does not match the adjusted performance, the working status of the memory 320 continues to be adjusted until the adjusted performance of the plurality of channel clusters in the memory 320 matches the system load. It should be noted that, if the adjusted performance of the plurality of channel clusters in the memory 320 reaches the performance threshold of the plurality of channel clusters in the memory 320, and the adjusted performance of the plurality of channel clusters in the memory 320 does not match the system load, adjusting the working status of the memory 320 is stopped. It should be noted that, in a gradual adjustment process, an amount of each adjustment needs to be moderate, to improve precision of adjusting the performance of the memory.

The manner of adjusting the working status of the memory 320 includes at least one of the following two manners. In a first manner, a signal generation circuit 410 is controlled to perform frequency adjustment on at least one channel cluster in the plurality of channel clusters in the memory 320, and a power supply management circuit 420 is controlled to perform voltage adjustment on the at least one channel cluster in the plurality of channel clusters in the memory 320. The frequency adjustment on the channel cluster refers to controlling the signal generation circuit 410 to adjust a frequency of a clock signal for refreshing the channel cluster, in other words, adjust a refresh frequency of the channel cluster. The voltage adjustment on the channel cluster refers to controlling the power supply management circuit 420 to adjust a voltage of a power supply signal provided to the channel cluster, in other words, adjust a working voltage of the channel cluster. If the frequency of the clock signal for refreshing the channel cluster is increased, the refresh frequency of the channel cluster is increased, so that performance of the channel cluster is increased. If the voltage of the power supply signal provided to the channel cluster is increased, the working voltage of the channel cluster is increased, so that the performance of the channel cluster is increased. It should be noted that, when the refresh frequency of the channel cluster is increased, a refresh voltage of the channel cluster needs to be increased first. When the refresh frequency of the channel cluster is decreased, the refresh voltage of the channel cluster needs to be decreased first. In a second manner, the signal generation circuit 410 and the power supply management circuit 420 are controlled to perform power on/off on the at least one channel cluster in the plurality of channel clusters. If the performance of the plurality of channel clusters in the memory 320 needs to be increased, the performance of the plurality of channel clusters in the memory 320 may be increased in a manner such as controlling the signal generation circuit 410 and the power supply management circuit 420 to power on a channel cluster that is powered off in the plurality of channel clusters in the memory 320, or power on a channel cluster with higher performance and power off a channel cluster with lower performance. If the performance of the plurality of channel clusters in the memory 320 needs to be decreased, the performance of the plurality of channel clusters in the memory 320 may be decreased in a manner such as controlling the signal generation circuit 410 and the power supply management circuit 420 to power off the at least one channel cluster in the plurality of channel clusters in the memory 320, or power off the channel cluster with higher performance and power on the channel cluster with lower performance. It should be noted that, before the channel cluster is powered off, information in the channel cluster to be powered off needs to be migrated to the channel cluster that is powered on.

A process of control the channel cluster to be powered on is as follows: first controlling the power supply management circuit 420 to provide a power supply signal for the channel cluster, and then controlling the signal generation circuit 410 to provide a reset signal for the channel cluster, to restore the channel cluster to an initial state. A process of control the channel cluster to be powered off is as follows: first controlling the signal generation circuit 410 to provide a termination signal for the channel cluster; and after the termination signal is executed by the channel cluster, returning an end instruction to the processor 430, where the end instruction indicates that all instructions for accessing the channel cluster have been executed. Then, the processor 430 controls, in response to the end instruction, the power supply management circuit 420 to stop providing the power supply signal to the channel cluster. A prerequisite for powering off the channel cluster is that all the instructions for accessing the channel cluster have been executed. Therefore, to ensure that when the channel cluster is powered off, all the instructions for accessing the channel cluster have been executed, before the channel cluster is controlled to be powered off, a termination signal is sent to the channel cluster, in other words, the termination signal is used as a threshold, and after the termination signal is sent, the instruction for accessing the channel cluster is no longer received. In this way, when the termination signal is executed by the channel cluster, it indicates that all the instructions for accessing the channel cluster have been executed. Therefore, the power supply management circuit 420 may be triggered by using the end instruction generated by executing the termination signal, so that the power supply management circuit 420 stops providing the power supply signal to the channel cluster.

It should be noted that, information such as a quantity of channel clusters for frequency adjustment, a channel cluster to be powered on, and a channel cluster to be powered off may be determined based on information such as target performance and current performance of the plurality of channel clusters in the memory 320.

There are two cases in which the system load of the electronic device does not match the performance of the plurality of channel clusters in the memory 320. In a first case, the performance of the plurality of channel clusters in the memory 320 cannot meet the system load of the electronic device. In a second case, the plurality of channel clusters in the memory 320 are redundant on the basis of satisfying the system load of the electronic device. For the first case, the performance of the plurality of channel clusters in the memory 320 needs to be increased, so that the performance of the plurality of channel clusters in the memory 320 matches the system load. For the second case, the performance of the plurality of channel clusters in the memory 320 needs to be decreased, so that the performance of the plurality of channel clusters in the memory 320 matches the system load.

It can be learned from the foregoing that, when the system load of the electronic device does not match the performance of the plurality of channel clusters in the memory 320, the working status of the memory 320 is adjusted to adjust the performance of the plurality of channel clusters in the memory 320. In other words, the performance of the plurality of channel clusters in the memory 320 (that is, the performance of the memory) varies with the system load of the electronic device. In this way, on a basis that the performance of the memory meets the requirement of the electronic device on the performance of the memory, differentiated management on performance and power consumption of the memory 320 can be implemented.

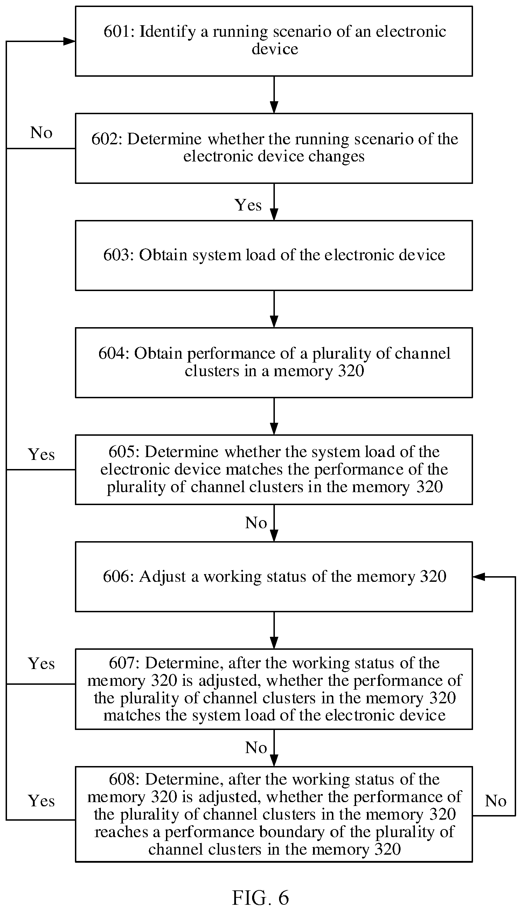

The following describes, by using an example, a process in which the processor 430 gradually adjusts the working status of the memory 320. Refer to FIG. 6. The process includes the following steps. 601: Identify the running scenario of the electronic device. 602: Determine whether the running scenario of the electronic device changes. If the running scenario of the electronic device does not change, step 601 is performed. If the running scenario of the electronic device changes, step 603 is performed. 603: Obtain the system load of the electronic device. 604: Obtain the performance of the plurality of channel clusters in the memory 320. 605: Determine whether the system load of the electronic device matches the performance of the plurality of channel clusters in the memory 320. If the system load of the electronic device matches the performance of the plurality of channel clusters in the memory, step 601 is performed. If the system load of the electronic device does not match the performance of the plurality of channel clusters in the memory, step 606 is performed. 606: Adjust the working status of the memory 320. 607: Determine, after the working status of the memory 320 is adjusted, whether the performance of the plurality of channel clusters in the memory 320 matches the system load of the electronic device. If the performance of the plurality of channel clusters in the memory 320 matches the system load of the electronic device, step 601 is performed. If the performance of the plurality of channel clusters in the memory 320 does not match the system load of the electronic device, step 608 is performed. 608: Determine, after the working status of the memory 320 is adjusted, whether the performance of the plurality of channel clusters in the memory 320 reaches the performance threshold of the plurality of channel clusters in the memory 320. If the performance of the plurality of channel clusters in the memory 320 reaches the performance threshold of the plurality of channel clusters in the memory 320, step 601 is performed. If the performance of the plurality of channel clusters in the memory 320 does not reach the performance threshold of the plurality of channel clusters in the memory 320, step 606 is performed.

When the electronic device is in the sleep state, the electronic device does not require a large capacity of the memory. As a result, whether to power off a part of channel clusters in the memory, power off a channel cluster that needs to be powered off, and perform frequency adjustment and voltage adjustment on a channel cluster that is not powered off, in other words, decrease a refresh frequency and a refresh voltage of the channel cluster that is not powered off, needs to be determined based on information stored in the memory to decrease performance and power consumption of the memory, so that the performance and the power consumption of the memory match a requirement of the electronic device on the performance of the memory during the sleep state. It should be noted that, when the refresh frequency and the refresh voltage of the channel cluster that is not powered off are decreased, the refresh frequency and the refresh voltage of the channel cluster that is not powered off are decreased to a frequency and a voltage that can maintain information in the channel cluster.

Based on this, when receiving a sleep notification of the electronic device, the processor 430 adjusts the working status of the memory 320, to decrease the performance and the power consumption of the memory 320 as much as possible. A manner of adjusting the working status of the memory 320 is: controlling a signal generation circuit 410 and a power supply management circuit 420 to perform power on/off on the at least one channel cluster in the plurality of channel clusters in the memory 320, controlling the signal generation circuit 410 to decrease the refresh frequency of the channel cluster that is not powered off, and controlling the power supply management circuit 420 to decrease the refresh voltage of the channel cluster that is not powered off.

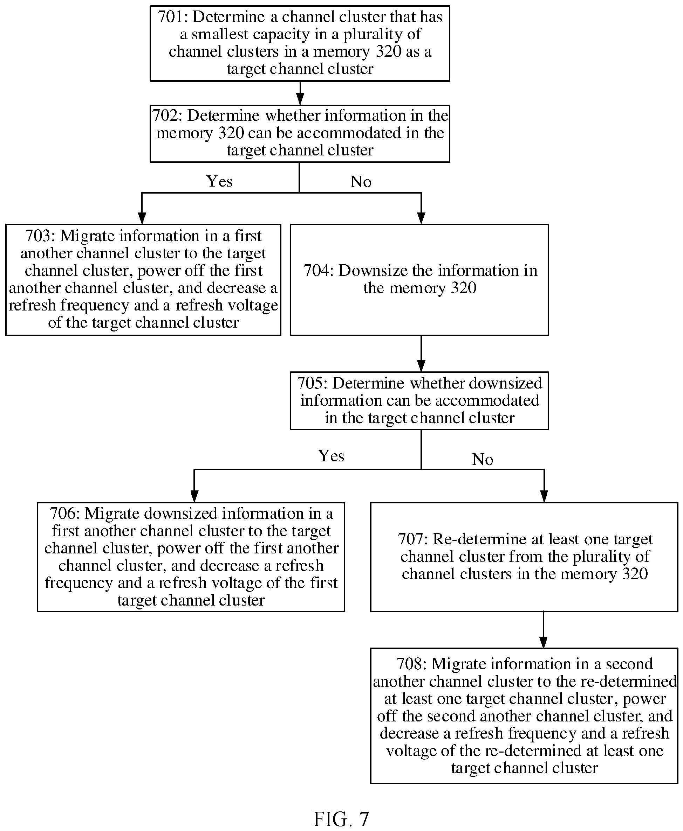

FIG. 7 is a schematic flowchart 3 of adjusting a working status of a memory according to an embodiment of this application. As shown in FIG. 7, a process of adjusting the working status of the memory by a processor 430 includes the following steps. 701: Determine a channel cluster that has a smallest capacity in the plurality of channel clusters in the memory 320 as a target channel cluster. 702: Determine whether information in the memory 320 can be accommodated in the target channel cluster. If the information in the memory 320 can be accommodated in the target channel cluster, step 703 is performed. 703: Migrate information in a first another channel cluster to the target channel cluster, power off the first another channel cluster, and decrease a refresh frequency and a refresh voltage of the target channel cluster. The first another channel cluster is a channel cluster other than the target channel cluster in the plurality of channel clusters in the memory 320. The powering off the first another channel cluster includes: controlling a signal generation circuit 410 and a power supply management circuit 420 to power off the first another channel cluster, in other words, cut off a power supply signal of the first another channel cluster. The decreasing the refresh frequency and the refresh voltage of the target channel cluster includes: controlling the signal generation circuit 410 to decrease the refresh frequency of the target channel cluster, and controlling the power supply management circuit 420 to decrease the refresh voltage of the target channel cluster.

It is obvious that when the electronic device enters the sleep state, the channel cluster that has the smallest capacity is determined as the target channel cluster. When the information in the memory 320 can be accommodated in the target channel cluster, information in a channel cluster other than the target channel cluster is migrated to the target channel cluster, the channel cluster other than the target channel cluster is powered off, and the refresh voltage and the refresh frequency of the target channel cluster are decreased. In this way, when it is ensured that the information in the memory 320 is not lost, performance and power consumption of the memory 320 are decreased. In addition, because a capacity of the target channel cluster is the smallest, the power consumption and the performance of the memory are minimized.

Further, if the information in the memory 320 cannot be accommodated in the target channel cluster, step 704 is performed. 704: Downsize the information in the memory 320. Specifically, information in each channel cluster in the memory 320 is downsized. 705: Determine whether downsized information can be accommodated in the target channel cluster. If the downsized information can be accommodated in the target channel cluster, step 706 is performed. If the downsized information cannot be accommodated in the target channel cluster, step 707 is performed. 706: Migrate downsized information in a first another channel cluster to the target channel cluster, power off the first another channel cluster, and decrease a refresh frequency and a refresh voltage of a first target channel cluster. Herein, for descriptions of the first another channel cluster, powering off the first another channel cluster, and decreasing the refresh frequency and the refresh voltage of the target channel cluster, refer to descriptions in 703. 707: Re-determine at least one target channel cluster in the plurality of channel clusters in the memory 320. The at least one target channel cluster is at least one channel cluster that has a smallest capacity in the plurality of channel clusters in the memory 320 and that can accommodate the downsized information. 708: Migrate information in a second another channel cluster to the re-determined at least one target channel cluster, power off the second another channel cluster, and decrease a refresh frequency and a refresh voltage of the re-determined at least one target channel cluster. The second another channel cluster is a channel cluster other than the re-determined at least one target channel cluster in the plurality of channel clusters in the memory 320. The powering off the second another channel cluster includes: controlling the signal generation circuit 410 and the power supply management circuit 420 to power off the second another channel cluster, in other words, cut off a power supply signal of the second another channel cluster. The decreasing a refresh frequency and a refresh voltage of the re-determined at least one target channel cluster includes: controlling the signal generation circuit 410 to decreasing the refresh frequency of the re-determined at least one target channel cluster, and controlling the power supply management circuit 420 to decrease the refresh voltage of the re-determined at least one target channel cluster.

It is obvious that when the target channel cluster cannot accommodate the information in the memory 320, the information in the memory 320 is downsized. When the target channel cluster can accommodate the downsized information, related steps of information migration are performed. In this way, when it is ensured that the downsized information is not lost, the performance and the power consumption of the memory 320 are decreased. In addition, when the target channel cluster cannot accommodate the downsized information, the at least one target channel cluster is re-determined based on an amount of the downsized information, and the related steps of information migration are performed. In this way, when it is ensured that the downsized information is not lost, the performance and the power consumption of the memory 320 are decreased.

In addition, it can be learned from the foregoing steps 701 to 708 that, in this application, based on the information in the memory, the channel cluster that has the smallest capacity and the downsizing of the information, the at least one target channel cluster may be flexibly determined, and a channel cluster other than the at least one target channel cluster in the plurality of channel clusters is powered off, in other words, the performance and the power consumption of the memory in the electronic device that enters the sleep state are decreased as much as possible within an allowed range.

It should be noted that, if the target channel cluster is not powered on, before the information migration, the signal generation circuit 410 and the power supply management circuit 420 are first controlled to power on the target channel cluster. It should be noted that, if a quantity of the re-determined at least one target channel cluster is equal to a quantity of the plurality of channel clusters in the memory 320, there is no channel cluster to be powered off, information migration and power-off of the channel cluster do not need to be performed, and only refresh voltages and refresh frequencies of the plurality of channel clusters are decreased.

A manner of downsizing the information in the memory 320 includes the following two manners. In a first manner, an amount of information that needs to be downsized is determined based on the capacity of the target channel cluster and an amount of information in the memory 320. Then, the information in the memory 320 is downsized based on the amount of the information that needs to be downsized. The downsized information includes the following two cases. In a first case, the downsized information can be accommodated in the target channel cluster. In a second case, the information is downsized to a limit and the downsized information cannot be accommodated in the target channel cluster. For the first case, step 706 is performed. For the second case, step 707 is performed.

The manner of downsizing the information includes but is not limited to: killing a process, clearing a cache, information compression, exchanging information to a non-volatile storage medium, or the like. It should be noted that, when the information is downsized, the foregoing downsizing manners that are to be used may be determined based on the amount of information that needs to be downsized. In addition, when the information in the memory 320 is exchanged to the non-volatile storage medium, an amount of exchanged information cannot exceed an available capacity of the non-volatile storage medium.

In a second manner, the information in the memory 320 is gradually downsized in different downsizing manners. Each time the downsizing is completed, whether the downsized information can be accommodated in the target channel cluster is determined. If the downsized information can be accommodated in the target channel cluster, the foregoing step 706 is performed. If the downsized information cannot be accommodated in the target channel cluster, the information in the memory 320 continues to be downsized, until the downsized information can be accommodated in the target channel cluster, or the information is downsized to a limit and the downsized information cannot be accommodated in the target channel cluster. When the information is downsized to a limit and the downsized information cannot be accommodated in the target channel cluster, the foregoing step 707 is performed. It should be noted that, when the information is gradually downsized, an amount of each downsizing needs to be moderate, to improve precision of downsizing.

It should be noted that, the foregoing process of downsizing the information in the memory 320 is an optional process, in other words, the process may be performed, or may alternatively not be performed. If the information in the memory 320 is not downsized, when the target channel cluster cannot accommodate the information in the memory 320, at least one target channel cluster is directly re-determined in the plurality of channel clusters in the memory 320, where the re-determined at least one target channel cluster is at least one channel cluster that has the smallest capacity in the plurality of channel clusters and that can accommodate the information in the memory, and processes of information migration, power-off of the channel cluster, and decreasing the refresh frequency and the refresh voltage are performed.

In another embodiment of this application, when the process of downsizing the information in the memory 320 is not performed, the foregoing processes may not be used, and at least one target channel cluster is directly determined in the plurality of channel clusters in the memory 320 based on the amount of the information in the memory 320, where the at least one target channel cluster is at least one channel cluster that has the smallest capacity in the plurality of channel clusters and that can accommodate the information in the memory, and processes of information migration, power-off of the channel cluster, and decreasing the refresh frequency and the refresh voltage.

In conclusion, it may be understood that a process in which the processor 430 powers off the at least one channel cluster in the plurality of channel clusters in the memory 320 in the foregoing manner is as follows: The processor 430 controls the signal generation circuit 410 and the power supply management circuit 420 to power off the at least one channel cluster by migrating information in the at least one of the plurality of channel clusters to the at least one target channel cluster. The at least one target channel cluster is at least one channel cluster that has a smallest capacity in the plurality of channel clusters and that can accommodate information in the memory.

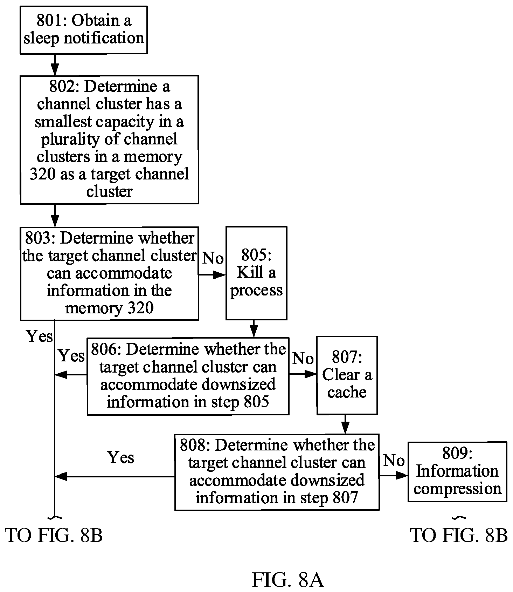

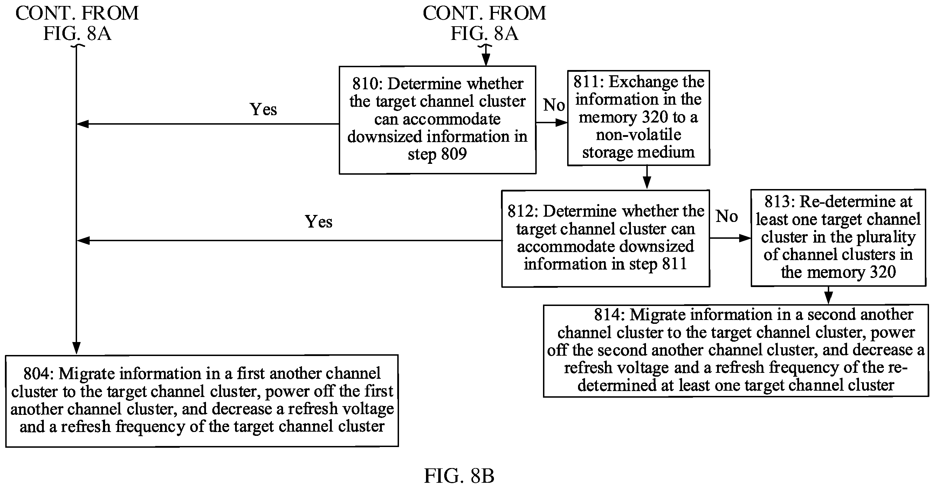

The following describes, by using an example, a process in which the processor 430 adjusts the working status of the memory 320. Refer to FIG. 8A and FIG. 8B. The process includes the following steps: 801: Obtain a sleep notification. 802: Determine a channel cluster that has a smallest capacity in the plurality of channel clusters in the memory 320 as a target channel cluster. 803: Determine whether the target channel cluster can accommodate information in the memory 320. If the target channel cluster can accommodate the information in the memory 320, step 804 is performed. If the target channel cluster cannot accommodate the information in the memory 320, step 805 is performed. 804: Migrate information in a first another channel cluster to the target channel cluster, power off the first another channel cluster, and decrease a refresh voltage and a refresh frequency of the target channel cluster. For descriptions of the first another channel cluster, powering off the first another channel cluster, and decreasing the refresh frequency and the refresh voltage of the target channel cluster, refer to the foregoing descriptions. Details are not described herein again. 805: Kill a process. To be specific, information that is related to the process and that is stored in the memory 320 is deleted, to downsize the information. 806: Determine whether the target channel cluster can accommodate downsized information in step 805. If the target channel cluster can accommodate the downsized information in step 805, step 804 is performed. If the target channel cluster cannot accommodate the downsized information in step 805, step 807 is performed. 807: Clear a cache In other words, on the basis of step 805, cache information stored in the memory 320 continues to be deleted, to downsize the information. 808: Determine whether the target channel cluster can accommodate downsized information in step 807. If the target channel cluster can accommodate the downsized information in step 807, step 804 is performed. If the target channel cluster cannot accommodate the downsized information in step 807, step 809 is performed. 809: Information compression. In other words, on the basis of step 807, the information in the memory 320 continues to be compressed, to downsize the information. 810: Determine whether the target channel cluster can accommodate downsized information in step 809. If the target channel cluster can accommodate the downsized information in step 809, step 804 is performed. If the target channel cluster cannot accommodate the downsized information in step 809, step 811 is performed. 811: Exchange the information in the memory 320 to a non-volatile storage medium. In other words, on the basis of step 809, the information in the memory 320 is migrated, to continue to downsize the information. The non-volatile storage medium is a storage medium other than the memory 320. It should be noted that a maximum amount of the migrated information in the memory 320 is determined based on an available capacity of the non-volatile storage medium. 812: Determine whether the target channel cluster can accommodate downsized information in step 811. If the target channel cluster can accommodate the downsized information in step 811, step 804 is performed. If the target channel cluster cannot accommodate the downsized information in step 811, step 813 is performed. It should be noted that, when step 804 is performed, if the information has been downsized, the migrated information is downsized information stored in another channel cluster. 813: Re-determine at least one target channel cluster in the plurality of channel clusters in the memory 320. The re-determined at least one target channel cluster is at least one channel cluster that has a smallest capacity in the plurality of channel clusters and that can accommodate the downsized information in step 811. 814: Migrate information in a second another channel cluster to the target channel cluster, power off the second another channel cluster, and decrease a refresh voltage and a refresh frequency of the re-determined at least one target channel cluster. For descriptions of the second another channel cluster, powering off the second another channel cluster, and decreasing the refresh frequency and the refresh voltage of the re-determined at least one target channel cluster, refer to the foregoing descriptions. Details are not described herein again.

It should be noted that, if a quantity of the re-determined at least one target channel cluster is equal to a quantity of the plurality of channel clusters, there is no channel cluster that needs to be powered off. In this case, only the refresh voltage and the refresh frequency of the at least one target channel cluster need to be decreased.

It should be noted that a signal generation circuit 410, a power supply management circuit 420, the processor 430, a channel interleaving controller 440, a plurality of storage controllers 450, and a plurality of performance monitors 460 may be implemented by using a logic circuit on a system-on-a-chip (System-on-a-Chip, SoC) in an electronic device. It should be noted that the processor 430, the channel interleaving controller 440, the plurality of storage controllers 450, and the plurality of performance monitors 460 are optional in a memory management apparatus, and therefore may be added or deleted as required. It should be noted that, if at least one of the processor 430, the channel interleaving controller 440, the plurality of storage controllers 450, and the plurality of performance monitors 460 is not disposed in the memory management apparatus, a corresponding function thereof may be completed by a corresponding circuit or module disposed in the electronic device.

It should be noted that, software code related to the foregoing process of adjusting the working status of the memory 320 may be stored in the memory 320 or another storage of the electronic device as a program, and the program runs on the processor 430, so that the memory management apparatus adjusts the working status of the memory, to implement management on performance and power consumption of the memory. In another embodiment of this application, a logic processing module may be further disposed in the memory management apparatus. The logic processing module includes a logic circuit, and the program for adjusting the working status of the memory 230 is executed by the logic processing module. In another embodiment of this application, the program may alternatively be run on the processor 310 of the electronic device, so that the memory management apparatus adjusts the working status of the memory, to implement the management on performance and power consumption of the memory. It should be noted that the foregoing description of an entity for executing the process of adjusting the working status of the memory 320 is merely an example, and is not intended to limit this application.

Based on the foregoing memory management apparatus, this application further provides a memory management method. The method is used to adjust a working status of a memory in an electronic device, to adjust performance and power consumption of the memory. An entity for executing the memory management method may be a processor, a logic processing module, or the like in the memory management apparatus. Alternatively, the entity for executing the memory management method may be a processor of the electronic device, or the like. This is not specifically limited in this application. The memory management method includes the following steps: controlling, by using a processor, a signal generation circuit and a power supply management circuit, to adjust the working status of the memory; providing, by using the signal generation circuit, an individual clock signal for each channel cluster in a plurality of channel clusters in the memory, where each channel cluster includes one or more channels, and each channel includes a plurality of storage units; and providing, by using the power supply management circuit, an individual power supply signal for each channel cluster. For a specific process of adjusting the working status of the memory, refer to the foregoing descriptions, and details are not described herein again.

Further, the method further includes: configuring, by using the processor, a channel interleaving mode for a channel interleaving controller, where the channel interleaving mode indicates an interleaving rule of each channel cluster; delivering an access instruction by using the processor, where the access instruction is for accessing a first channel cluster in the plurality of channel clusters; and interleaving, by using the channel interleaving controller and based on an interleaving rule of the first channel cluster, a first address that is in the access instruction and that corresponds to the first channel cluster, to obtain a second address for accessing the first channel cluster.

Further, the method further includes: accessing, by using a first storage controller in a plurality of storage controllers, a first channel based on a third address indicated in the second address, where the plurality of storage controllers are in a one-to-one correspondence with a plurality of channels in the memory, and the first storage controller corresponds to the first channel in the first channel cluster.

Further, the method further includes: monitoring, by using each performance monitor in a plurality of performance monitors, performance of a channel cluster corresponding to each performance monitor, where the plurality of performance monitors are in a one-to-one correspondence with the plurality of channel clusters. The adjusting the working status of the memory includes: adjusting, based on performance of the plurality of channel clusters, the working status of the memory.

An implementation principle and a technical effect of the foregoing memory management method in this application have been described above. For a more specific operation procedure further involved in the method, refer to the descriptions in the foregoing embodiments. Details are not described herein again.

This application further provides a computer-readable storage medium, where the computer storage medium stores a computer program. When the computer program is executed on a computer or a processor, the computer or the processor is enabled to perform the technical solution in any one of the foregoing method embodiments. This application further provides a computer program product. When the computer program is executed by a computer or a processor, the computer is enabled to perform the technical solution in any one of the foregoing method embodiments. The readable storage medium may be the memory 330 or the non-volatile storage medium mentioned in the foregoing embodiments, or may be a storage of another type.

Based on descriptions about the foregoing implementations, a person skilled in the art may understand that, for a purpose of convenient and brief description, division into the foregoing function modules is used as an example for illustration. In actual application, the foregoing functions may be allocated to different function modules and implemented according to a requirement. In other words, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

In addition, functional units in embodiments of this application may be integrated into one processing unit, each of the units may exist alone physically, or two or more units are integrated into one unit. The integrated units may be implemented in a form of hardware, or at least a part of the integrated units may be implemented in a form of a software functional unit. When one unit is implemented in the form of a software functional unit and sold or used as an independent product, the unit may be stored in one readable storage medium. Based on such an understanding, the technical solutions of this application essentially, or the part contributing to the prior art, or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A memory management apparatus, comprising a signal generation circuit and a power supply management circuit, wherein
the signal generation circuit is configured to provide an individual clock signal for each channel cluster in a plurality of channel clusters in a memory, wherein each channel cluster comprises one or more channels, and each channel comprises a plurality of storage units; and
the power supply management circuit is configured to provide an individual power supply signal for each channel cluster.

2. The apparatus according to claim 1, wherein the apparatus further comprises:
a processor, configured to adjust a working status of the memory.

3. The apparatus according to claim 2, wherein the processor is specifically configured to perform at least one of the following to adjust the working status of the memory:
controlling the signal generation circuit to perform frequency adjustment on at least one channel cluster in the plurality of channel clusters;
controlling the power supply management circuit to perform voltage adjustment on the at least one channel cluster; or
controlling the signal generation circuit and the power supply management circuit to perform power on/off on the at least one channel cluster in the plurality of channel clusters.

4. The apparatus according to either of claims 2 and 3, wherein the apparatus further comprises a channel interleaving controller; and
the processor is further configured to set a channel interleaving mode for the channel interleaving controller, and deliver an access instruction, wherein
the channel interleaving mode indicates an interleaving rule of each channel cluster, and the access instruction is for accessing a first channel cluster in the plurality of channel clusters; and
the channel interleaving controller is configured to interleave, based on an interleaving rule of the first channel cluster, a first address that is in the access instruction and that corresponds to the first channel cluster, to obtain a second address for accessing the first channel cluster.

5. The apparatus according to claim 4, wherein the apparatus further comprises a plurality of storage controllers, and the plurality of storage controllers are in a one-to-one correspondence with a plurality of channels in the memory; and
a first storage controller in the plurality of storage controllers corresponds to a first channel in the first channel cluster, and is configured to access the first channel based on a third address indicated in the second address.

6. The apparatus according to any one of claims 2 to 5, wherein the apparatus further comprises a plurality of performance monitors, and the plurality of performance monitors are in a one-to-one correspondence with the plurality of channel clusters;
each performance monitor in the plurality of performance monitors is configured to monitor performance of a channel cluster corresponding to each performance monitor; and
the processor is specifically configured to adjust the working status of the memory based on performance of the plurality of channel clusters.

7. The apparatus according to any one of claims 2 to 6, wherein the processor is specifically configured to: when system load of an electronic device to which the memory belongs does not match the performance of the plurality of channel clusters, adjust the working status of the memory.

8. The apparatus according to any one of claims 2 to 6, wherein the processor is specifically configured to: when receiving a sleep notification of an electronic device to which the memory belongs, adjust the working status of the memory.

9. The apparatus according to any one of claims 2 to 8, wherein the processor is specifically configured to perform the following steps to power off the at least one channel cluster:
migrating information in the at least one channel cluster to at least one target channel cluster; and
controlling the signal generation circuit and the power supply management circuit to power off the at least one channel cluster, wherein
the at least one target channel cluster is at least one channel cluster that has a smallest capacity in the plurality of channel clusters and that can accommodate information in the memory.

10. The apparatus according to claim 9, wherein the processor is further configured to downsize the information, to help the downsized information to be accommodated in the at least one target channel cluster.

11. A memory management method, comprising:
controlling, by using a processor, a signal generation circuit and a power supply management circuit, to adjust a working status of a memory;
providing, by using the signal generation circuit, an individual clock signal for each channel cluster in a plurality of channel clusters in the memory, wherein each channel cluster comprises one or more channels, and each channel comprises a plurality of storage units; and
providing, by using the power supply management circuit, an individual power supply signal for each channel cluster.

12. The method according to claim 11, wherein the controlling, by using a processor, a signal generation circuit and a power supply management circuit, to adjust a working status of a memory comprises at least one of the following:
controlling the signal generation circuit to perform frequency adjustment on at least one channel cluster in the plurality of channel clusters;
controlling the power supply management circuit to perform voltage adjustment on the at least one channel cluster; or
controlling the signal generation circuit and the power supply management circuit to perform power on/off on the at least one channel cluster in the plurality of channel clusters.

13. The method according to either of claims 11 and 12, wherein the method further comprises:
configuring, by using the processor, a channel interleaving mode for a channel interleaving controller, wherein the channel interleaving mode indicates an interleaving rule of each channel cluster;
delivering an access instruction by using the processor, wherein the access instruction is for accessing a first channel cluster in the plurality of channel clusters; and
interleaving, by using the channel interleaving controller and based on an interleaving rule of the first channel cluster, a first address that is in the access instruction and that corresponds to the first channel cluster, to obtain a second address for accessing the first channel cluster.

14. The method according to claim 13, wherein the method further comprises:
accessing, by using a first storage controller in a plurality of storage controllers, a first channel based on a third address indicated in the second address, wherein
the plurality of storage controllers are in a one-to-one correspondence with a plurality of channels in the memory, and the first storage controller corresponds to the first channel in the first channel cluster.

15. The method according to any one of claims 11 to 14, wherein the method further comprises:
monitoring, by using each performance monitor in a plurality of performance monitors, performance of a channel cluster corresponding to each performance monitor, wherein
the plurality of performance monitors are in a one-to-one correspondence with the plurality of channel clusters; and
the adjusting a working status of a memory comprises:
adjusting, based on performance of the plurality of channel clusters, the working status of the memory.

16. The method according to any one of claims 11 to 15, wherein the adjusting the working status of the memory comprises:
when system load of an electronic device to which the memory belongs does not match the performance of the plurality of channel clusters, adjusting the working status of the memory.

17. The method according to any one of claims 11 to 15, wherein the adjusting a working status of a memory comprises:
when receiving a sleep notification of an electronic device to which the memory belongs, adjusting the working status of the memory.

18. The method according to any one of claims 11 to 17, wherein the controlling the signal generation circuit and the power supply management circuit to perform power on/off on the at least one channel cluster comprises:
migrating information in the at least one channel cluster to at least one target channel cluster; and
controlling the signal generation circuit and the power supply management circuit to power off the at least one channel cluster, wherein
the at least one target channel cluster is at least one channel cluster that has a smallest capacity in the plurality of channel clusters and that can accommodate information in the memory.

19. The method according to claim 18, wherein the method further comprises:
downsizing, by using the processor, the information to help the downsized information to be accommodated in the at least one target channel cluster.

20. A computer-readable storage medium, comprising a computer program, wherein when the computer program is executed on a computer or a processor, the computer or the processor is enabled to perform the method according to any one of claims 11 to 19.

21. A computer program, wherein when the computer program is executed by a computer or a processor, the computer or the processor is configured to perform the method according to any one of claims 11 to 19.

22. An electronic device, comprising the memory management apparatus and the memory according to any one of claims 1 to 10, wherein
the memory management apparatus is configured to adjust a working status of the memory.
